Europäisches Patentamt

European Patent Office

Office européen des brevets

(19)

(11) Numéro de publication: **0 275 740 B1**

(12) # FASCICULE DE BREVET EUROPEEN

(45) Date de publication de fascicule du brevet:
10.07.91

(51) Int. Cl.⁵: **H04N 3/15**

(21) Numéro de dépôt: **87402818.6**

(22) Date de dépôt: **11.12.87**

(54) Circuit de lecture d'un dispositif photosensible à transfert de ligne, dispositif photosensible à transfert de ligne comportant un tel circuit, et procédé de lecture d'un tel dispositif.

(30) Priorité: **16.12.86 FR 8617571**

(43) Date de publication de la demande:
**27.07.88 Bulletin 88/30**

(45) Mention de la délivrance du brevet:
**10.07.91 Bulletin 91/28**

(84) Etats contractants désignés:
**DE FR GB NL**

(56) Documents cités:
**EP-A- 0 141 695**

**IBM TECHNICAL DISCLOSURE BULLETIN, vol. 13, no. 12, mai 1971, pages 3734-3735, New York, US; L.G. HELLER: "Bucket-brigade delay line with loss compensation"**

(73) Titulaire: **THOMSON-CSF**
**51, Esplanade du Général de Gaulle**
**F-92800 Puteaux(FR)**

(72) Inventeur: **Berger, Jean-Luc**
**THOMSON-CSF SCPI 19, avenue de Messine**
**F-75008 Paris(FR)**

(74) Mandataire: **Guérin, Michel et al**
**THOMSON-CSF SCPI**
**F-92045 PARIS LA DEFENSE CEDEX 67(FR)**

**Description**

La présente invention concerne un circuit de lecture d'un dispositif photosensible à transfert de ligne. Elle concerne également un dispositif photosensible à transfert de ligne comportant un tel circuit de lecture et un procédé de lecture d'un tel dispositif.

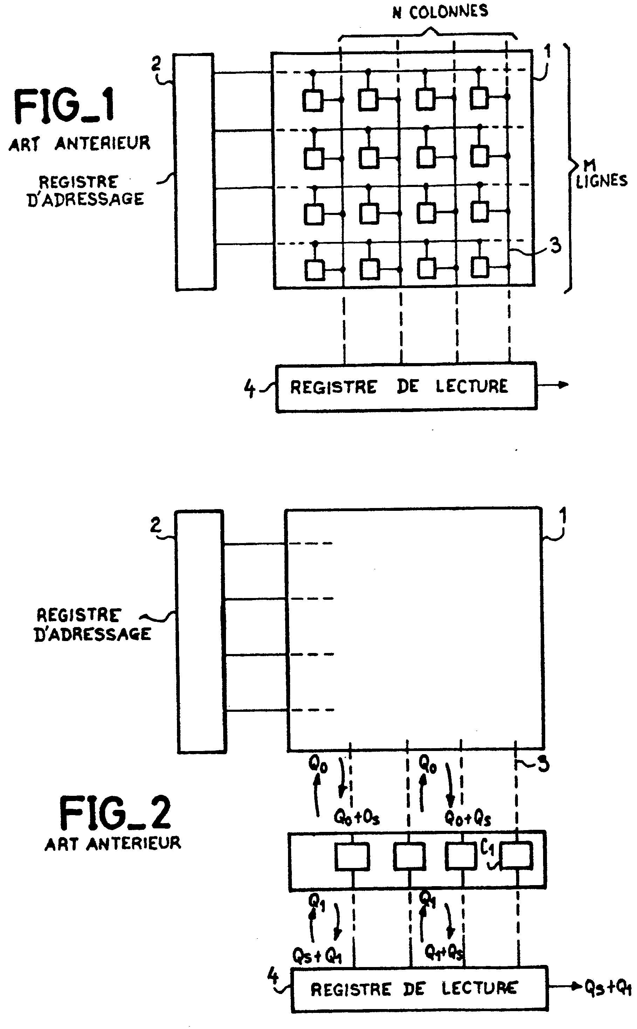

Les dispositifs photosensibles à transfert de ligne sont bien connus de l'art antérieur. On rappelle que ces dispositifs comportent généralement, comme cela est représenté schématiquement sur la figure 1, une zone photosensible 1, constituée d'une matrice de M lignes, chaque ligne comprenant N éléments photosensibles P. Cette zone reçoit l'image à analyser et la transforme en charges électriques, dites charges-signal $Q_s$. Les éléments photosensibles d'une même ligne sont reliés entre eux, ainsi qu'à un registre d'adressage 2 qui permet de sélectionner une ligne de la matrice. Les éléments photosensibles d'une même colonne sont reliés à une même colonne conductrice 3. Lorsqu'une ligne de la matrice est sélectionnée par le registre d'adressage, les charges-signal créées dans chacun des éléments photosensibles de cette ligne sont transférés par l'intermédiaire des colonnes conductrices 3 vers un registre de lecture à transfert de charge 4 à entrées parallèles et sortie série.

La demande de brevet européen EP-A-0.078.038 au nom de Matsushita et le brevet français FR-A-2.538.200 au nom de Thomson-CSF concernent des dispositifs photosensibles à transfert de ligne.

Dans ces deux brevets on améliore l'efficacité du transfert des charges en superposant une quantité de charge $Q_o$, dite d'entraînement ou de polarisation, lors du transfert de chaque quantité de charge-signal $Q_s$ d'une colonne conductrice 3 sur une capacité $C_1$, puis en superposant une quantité de charge d'entraînement ou de polarisation $Q_1$ lors du transfert de chaque quantité de charge-signal $Q_s$ d'une capacité $C_1$ vers le registre de lecture.

Il est connu que lorsqu'on transfère des charges par écrémage au-dessus d'une barrière de potentiel d'une capacité source vers une capacité drain, il faut superposer au signal à transférer une charge de polarisation constante qui maintient l'efficacité du transfert à un niveau acceptable quelle que soit l'amplitude du signal à transférer.

On a illustré sur la figure 2 les différents transferts dont il vient d'être question. Ces transferts ne constituent qu'une partie des transferts décrits dans le brevet Thomson-CSF cité où le transfert des charges-parasites se fait aussi avec des charges de polarisation.

Lors des transferts des capacités $C_1$ vers le registre de lecture, les quantités de charges d'entraînement $Q_o$ sont retenues sur les capacités $C_1$ et des quantités de charges égales à $Q_1 + Q_s$ sont transmises dans le registre. En sortie du registre, on lit donc des quantités de charges égales à $Q_1 + Q_s$.

Après chaque transfert de charges-signal $Q_s$, des charges de polarisation $Q_o$ et $Q_1$ sont renvoyées respectivement des capacités $C_1$ vers les colonnes et et du registre de lecture vers les capacités $C_1$, comme cela est illustré par la figure 2.

Le problème qui se pose est que les structures proposées par l'art antérieur ne sont pas utilisables lorsque les colonnes conductrices présentent une capacité élevée, de l'ordre d'un nanofarad, comme cela est le cas dans des applications actuelles qui seront détaillées par la suite.

On va montrer dans ce qui suit quelles sont les limites des structures proposées par l'art antérieur, en ce qui concerne la valeur maximale tolérable pour la capacité des colonnes conductrices.

La capacité d'un registre à transfert de charge est telle qu'on ne peut pas utiliser une quantité de charge d'entraînement ou de polarisation $Q_1$ qui soit supérieure à quelques pico-coulombs sans être conduits à des surfaces rédhibitoires pour le registre 4. En effet, le registre doit pouvoir transporter la charge d'entraînement $Q_1$ ainsi qu'une charge-signal $Q_s$ dont la valeur maximale est de quelques pico-coulombs. On adoptera, par exemple, la limite suivante sur la valeur de $Q_1$ :

$$Q_1 \leq 1 \text{ p.C} \quad (1)$$

Par ailleurs, on sait, par exemple par le brevet Thomson cité, qu'une quantité de charge d'entraînement $Q_i$ doit avoir une valeur suffisante pour permettre de passer en forte inversion au début du transfert des charges en provenance d'une capacité $C_i$. Cette condition se traduit par la formule suivante :

$$\frac{Q_i}{C_i} \geqslant \phi_F = \frac{kT}{q} \cdot Ln \frac{N_D}{n_i} \quad (1')$$

où $\phi_F$ donne la position du niveau de Fermi, k est la constante de Boltzmann, T la température, q la charge de l'électron, $N_D$ la concentration du dopage du substrat et $n_i$ la concentration intrinsèque.

On choisit pour $N_D$ et $n_i$ les valeurs moyennes suivantes : $N_D = 10^{16}/cm^3$ et $n_i = 10^{10}cm^3$, ce qui donne la condition suivante sur les valeurs de $Q_1$ et de $C_1$ :

$$\frac{Q_1}{C_1} \gg 0,360 \text{ V} \qquad (2)$$

Etant donnée la relation (1), on obtient la condition suivante sur la valeur de la capacité $C_1$ :

$$C_1 \ll \frac{1pC}{0,360 \text{ V}} = 2,8 \text{ p.F.} \qquad (3)$$

Par ailleurs, la capacité $C_1$ doit être capable de stocker les quantités de charge $Q_o$, avec une excursion de tension V compatible avec les sources de tension ordinairement utilisées dans les semi-conducteurs. Cette excursion de tension V étant de l'ordre de quelques volts, on peut poser la condition suivante :

$\Delta V \leq 10 \text{ V} \qquad (4)$

et la quantité de charge de polarisation maximale $Q_o$ qui peut être stockée dans chaque capacité $C_1$ s'écrit, étant données les relations (3) et (4).

$Q_o \leq 2,8 \text{ pF} \cdot 10 \text{ V} = 28 \text{ p C} \qquad (5)$

L'application de la condition précédemment énoncée sur le transfert en forte inversion :

$$\frac{Q_i}{C_i} \gg \phi_F \quad , \quad \text{soit} \frac{Q_o}{C_o} \gg \phi_F = 0,360 \text{ V}$$

permet de déterminer la valeur maximale tolérable $C_o$ pour les capacités $C_o$ des colonnes conductrices 3 :

$$C_o \quad \frac{28 \text{ pC}}{0,360 \text{ V}} = 78 \text{ pF} \qquad (6)$$

La relation (6) montre que les structures proposées par l'art antérieur ne permettent pas un fonctionnement satisfaisant lorsque la capacité $C_o$ des colonnes conductrices 3 est supérieure à quelques dizaine de picofarads.

Ceci peut être vérifié en calculant la charge de polarisation $Q_o$ qui est rendue nécessaire lorsqu'on utilise des colonnes conductrices 3 de capacité $C_o$ de l'ordre de 1000 pF.

L'application de la condition précédemment énoncée sur le transfert en forte inversion :

$$\frac{Q_i}{C_i} \gg \phi_F \ (1'), \quad \text{soit} \frac{Q_o}{C_o} \gg 0,360 \text{ V} \ (2)$$

donne la condition suivante :

$Q_o \geq 360 \text{ p.C} \qquad (7)$

3

Par ailleurs, dans l'article paru le 8 août 1985, aux noms de J.L. Berger, L. Brissot et Y. Cazaux de Thomson-CSF, dans la revue IEEE Transactions on Electron Devices, vol. ED 32, numéro 8, et qui est intitulé "Line-transfer image sensor operating in the double-reading mode", il est défini page 1517, relation (6), une expression de l'inefficacité de transfert qui permet de calculer la valeur de la quantité de charge d'entraînement servant à effectuer ce transfert.

L'inefficacité de transfert $\epsilon_0$ à partir de la capacité $C_0$ des colonnes vers une capacité $C_1$ s'écrit de la façon suivante, lorsqu'on néglige un terme du second ordre $\epsilon_F$ :

$$\epsilon_o = C_o{}^3 \cdot \frac{2kT/q}{\beta Q_o{}^2} \cdot \frac{1}{T_1} \quad (8)$$

où $T_1$ est la durée du transfert, et $\beta$ caractérise le canal où s'effectue le transfert.

L'expression de $Q_0$ est alors la suivante :

$$Q_o = \sqrt{\frac{2 C_o{}^3 k T}{\epsilon_o q \beta} \cdot \frac{1}{T_1}} \quad (9)$$

On obtient pour $Q_0$ la valeur suivante :

$Q_o$ = 1000 pC (10), en adoptant les valeurs courantes suivantes :

$\epsilon_0 \leq 1\%$, $B = 10^{-4}$ A/V², $\frac{kT}{q} = 26$ mV

La valeur obtenue pour $Q_0$ (10) est tout à fait disproportionnée étant donnée la relation (5), $Q_0 \leq 28$ pC, obtenue lors des calculs précédents.

La Demanderesse a donc montré que les structures proposées dans l'art antérieur ne sont pas utilisables lorsque la capacité $C_0$ des colonnes conductrices est élevée par rapport à la capacité de stockage de l'élément photosensible et du registre de lecture. Par exemple, lorsque cette capacité Co est de l'ordre d'1nF alors que la capacité des éléments photosensibles et du registre est de l'ordre de 1 pF.

Il faut savoir que les structures de l'art antérieur sont utilisables lorsque la capacité des éléments photosensibles, des colonnes conductrices et du registre à transfert de charge est de l'ordre de quelques picofarads.

La présente invention permet de résoudre le problème précédemment énoncé. Elle concerne une nouvelle structure du circuit de lecture d'un dispositif photosensible à transfert de ligne qui permet de tenir compte de la valeur élevée de la capacité des colonnes conductrices. Ce circuit de lecture permet un transfert efficace et avec un bruit minimum des charges-signal depuis les éléments photosensibles vers le registre de lecture à transfert de charge qui assure une sortie série de l'information vidéo.

La présente invention concerne un circuit de lecture d'un dispositif photosensible à transfert de ligne, comportant une zone photosensible constituée d'éléments photosensibles disposés selon des lignes et des colonnes, les éléments photosensibles d'une même colonne étant reliés à une colonne conductrice qui aboutit au circuit de lecture, ce circuit de lecture comportant au moins un registre à décalage à transfert de charge, la capacité des colonnes conductrices étant élevée par rapport à celle des éléments photosensible et du registre, caractérisé en ce que le circuit de lecture comporte, pour chaque colonne conductrice, plusieurs capacités de stockage des charges séparées par un transistor MOS, fonctionnant en saturation et assurant le passage des charges-signal provenant de chaque colonne conductrice d'une capacité à la suivante jusqu'au registre de lecture, les capacités de stockage ayant des valeurs décroissantes lorsqu'on se rapproche du registre de lecture, en ce que le circuit de lecture comporte aussi des moyens pour générer des quantités de charge de polarisation accompagnant le transfert des charges-signal provenant d'une colonne conductrice vers une capacité de stockage, puis leur transfert d'une capacité de stockage à la suivante jusqu'au registre, les quantités de charges de polarisation ayant des valeurs décroissantes lorsqu'on se rapproche du registre de lecture et en ce que le circuit de lecture comporte aussi des moyens assurant le retour des quantités de charges de polarisation d'une capacité de stockage ou du registre vers la capacité précédante.

La présente invention concerne également un dispositif photosensible à transfert de ligne muni d'un tel circuit de lecture et un procédé de lecture d'un tel dispositif.

D'autres objets, caractéristiques et résultats de l'invention ressortiront de la description suivante, donnée à titre d'exemple non limitatif et illustrée par les figures annexées qui représentent :
- les figures 1 et 2, des schémas de dispositifs photosensibles à transfert de ligne selon l'art antérieur ;
- la figure 3, le schéma d'une partie d'un mode de réalisaion d'un circuit de lecture selon l'invention ;
- les figures 4a, b et c, une vue en coupe transversale du circuit de lecture de la figure 3 et des schémas expliquant son fonctionnement ;
- la figure 5, le schéma d'un dispositif photosensible à transfert de ligne utilisant des circuits de lecture selon l'invention ;
- la figure 6, une vue de dessus d'une partie du dispositif de la figure 5 ;
- les figures 7a à g, une vue en coupe transversale d'une partie du dispositif de la figure 5 et des schémas expliquant son fonctionnement ;
- les figures 8a à m, des diagrammes temporels des signaux de commande utilisés par le dispositif de la figure 6.

Sur les différentes figures, les mêmes repères désignent les mêmes éléments, mais, pour des raisons de clarté, les cotes et proportions de divers éléments ne sont pas respectées.

Les figures 1 et 2 ont été décrites dans l'introduction de la description.

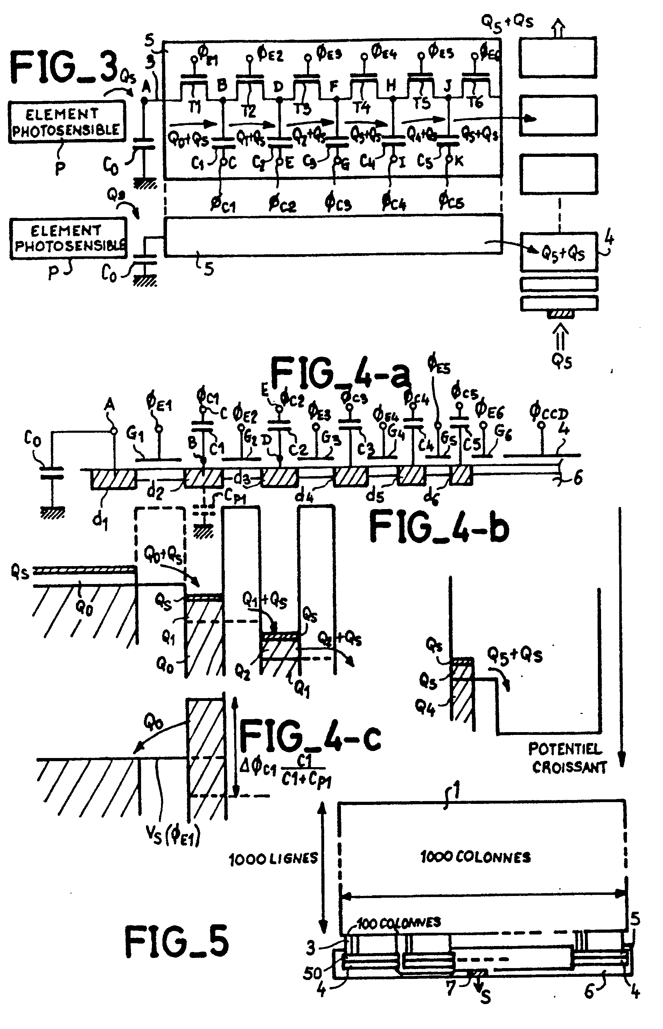

Sur la figure 3, on a représenté de façon schématique une partie d'un mode de réalisation d'un circuit de lecture selon l'invention.

Ce circuit de lecture se termine par un registre de lecture à transfert de charge 4. A chaque étage de ce registre est relié un circuit 5 tel que celui qui est représenté sur la figure 3 et qui est constitué, dans l'exemple représenté sur la figure 3, par une succession de cinq capacités $C_1$ à $C_5$ et de six transistors MOS $T_1$ à $T_5$. Ce circuit est relié à une colonne conductrice 3 d'un dispositif photosensible à transfert de ligne tel que ceux des figures 1 et 2 ; cette colonne 3 est symbolisée sur la figure 3 par sa capacité $C_o$ sur laquelle se déverse une quantité de charge-signal $Q_s$ en provenance d'un élément photosensible P. A chaque colonne conductrice 3 du dispositif photosensible à transfert de ligne est relié un circuit 5 débouchant sur l'un des étages du registre de lecture 4. Sur la figure 3, on n'a représenté pour des raisons d'encombrement que deux circuits 5 débouchant sur le registre de lecture 4, et seul l'un des circuits 5 est représenté de façon détaillée.

On voit sur la figure 3 que le circuit 5 est constitué par un transistor MOS $T_1$ relié à l'une des bornes de la capacité $C_o$, dont l'autre borne est à la masse et relié à l'une des bornes B d'une capacité $C_1$. La grille du transistor MOS $T_1$ reçoit un signal de commande $\phi_{E1}$ et l'autre borne C de la capacité $C_1$ reçoit un signal de commande $\phi_{C1}$. A la borne B est relié un transistor MOS $T_2$, recevant sur sa grille le signal de commande $\phi_{E2}$ et qui est également relié à une borne D d'une capacité $C_2$ dont l'autre borne E reçoit un signal de commande $\phi_{C2}$.

Quatre autres transistors $T_3$, $T_4$, $T_5$, $T_6$ et quatre autres capacités $C_2$, $C_3$, $C_4$, $C_5$ sont reliés de la même façon que sont reliés les transistors $T_1$, $T_2$ et les capacités $C_1$, $C_2$. Le dernier transistor $T_6$ débouche sur un étage du registre de lecture 4.

La figure 4a est une vue en coupe transversale à travers l'un des circuits 5 de la figure 3. Comme cela est d'usage, chaque transistor MOS est représenté par deux diodes séparées par une grille. Ainsi le transistor MOS $T_1$ est constitué des deux diodes $d_1$ et $d_2$ séparées par la grille $G_1$ qui reçoit le signal $\phi_{E1}$. Le transistor MOS $T_2$ est constitué des deux diodes $d_2$ et $d_3$ séparées par la grille $G_2$ qui reçoit le signal $\phi_{E2}$ et ainsi de suite... La capacité $C_1$ qui reçoit le signal $\phi_{C1}$ sur sa borne C a sa borne B reliée à la diode $d_2$. De même, la capacité $C_2$ reçoit le signal $\phi_{E2}$ sur sa borne E et a sa borne D reliée à la capacité $C_3$. Les caractéristiques des transistors MOS et les signaux de commande qu'ils reçoivent sont tels qu'ils fonctionnent en saturation. Le circuit de lecture selon l'invention utilise la méthode bien connue de transfert de charge par écrémage au-dessus d'une barrière de potentiel.

Les figures 4b et c montrent l'évolution des potentiels dans le substrat semiconducteur 6 dans lequel est réalisé le circuit 5 de la figure 3. Les potentiels croissant sont dirigés vers le bas.

L'invention concerne des circuits de lecture pour dispositifs photosensibles à transfert de ligne dont la capacité $C_o$ des colonnes conductrices 3 est très importante par rapport à la capacité des détecteurs et du registre de lecture. En conséquence, sur la figure 4b, on a représenté une quantité de charge $Q_S$ de faible amplitude qui est transférée sur la capacité $C_o$ de grande valeur d'une colonne conductrice 3.

Comme cela a été montré précédemment, il faut superposer à $Q_s$ une quantité de charge de polarisation $Q_o$ qui vérifie la relation (1') et qui est donnée par la relation (9') en fonction des paramètres utiles du circuit, pour effectuer le transfert vers la capacité $C_1$ lorsque le signal $\phi_{E1}$ appliqué à la grille $G_1$

est à un niveau haut et permet ce transfert. Les autres grilles des circuits reçoivent des signaux de commande au niveau bas. La capacité $C_1$ reçoit aussi un signal d'horloge $\phi_{C1}$ au niveau haut. Comme le transistor $T_1$ fonctionne en saturation, le potentiel de la diode $d_1$ qui est flottant s'aligne sur le potentiel fixé par la grille $G_1$, et cela correspond au transfert vers la capacité $C_1$ d'une quantité de charge égale à $Q_o +$ $Q_s$, comme cela est illustré sur la figure 4b à gauche, en trait plein.

La capacité $C_1$ est choisie de valeur inférieure à la capacité $C_o$ des colonnes. Ainsi, on peut transférer la quantité de charge-signal $Q_s$ vers la capacité $C_2$ suivante en retenant la quantité de charge $Q_o$ et en utilisant une quantité de charge d'entraînement $Q_1$ d'amplitude inférieure à $Q_o$.

La relation (9) montre bien que l'amplitude de la charge d'entraînement dépend fortement de la valeur de la capacité source. La capacité $C_1$ étant de valeur inférieure à la capacité $C_o$, la charge d'entraînement $Q_1$ est de valeur inférieur à la charge d'entraînement $Q_o$.

Comme le transfert précédant celui-ci s'effectue alcrs que le transistor MOS $T_2$ est en saturation. Le signal $\phi_{E2}$ appliqué à la grille $G_2$ est à un niveau haut supérieur au niveau haut fixé par le signal $\phi_{E1}$ sous la grille $G_1$, comme cela est représenté en pointillés sur la figure 4b.

Le signal $\phi_{C2}$ appliqué à la capacité $C_2$ est aussi au niveau haut. Les autres signaux $\phi_{E1}$, $\phi_{C1}$ $\phi_{E3}$, $\phi_{C3}$... sont au niveau bas. Il est bien entendu qu'il ne s'agit là que d'un mode de fonctionnement possible parmi d'autres et qu'en particulier, les divers signaux de commande utilisés peuvent être modifiés. Le potentiel de la diode $d_2$ qui est flottant s'aligne sur le potentiel fixé par la grille $G_2$ ce qui correspond au transfert de $Q_1 + Q_S$ vers la capacité $C_2$ comme cela est représenté sur la figure 4b.

On effectue ensuite le transfert de la quantité de charge-signal $Q_S$ de $C_2$ vers $C_3$, en retenant la quantité de charge d'entraînement $Q_1$ et en utilisant une quantité de charge d'entraînement $Q_2$. Comme la capacité $C_2$ est choisie de valeur inférieure à celle de la capacité $C_1$, on peut utiliser une charge d'entraînement $Q_2$ de valeur inférieure à $Q_1$. Et ainsi de suite, la quantité de charge signal $Q_S$ est transférée sur des capacités de valeur décroissante en utilisant des charges d'entraînement également de valeur décroissante.

Ainsi après un nombre variable de transferts, et donc l'utilisation d'un circuit 5 comportant un nombre variable de transistors MOS fonctionnant en saturation et de capacités, la quantité de charge-signal $Q_S$ est transférée dans le registre de lecture en même temps qu'une charge de polarisation.

Sur la figure 3, six transistcrs $T_1$ à $T_5$ et cinq capacités $C_1$ à $C_5$ constituent le circuit 5. On transfère dans le registre de lecture une quantité de charge égale à $Q_5 + Q_S$.

Les capacités $C_1$ à $C_5$, et donc les charges de polarisation $Q_o$ à $Q_5$, sont de valeur décroissante. La quantité de charge d'entraînement $Q_5$ est d'amplitude telle qu'elle peut être sans problème transférée dans le registre de lecture 4 en même temps que la charge-signal $Q_s$.

Les grilles $G_1$ à $G_6$ reçoivent des signaux de commande $\phi_{E1}$ à $\phi_{E6}$ dont le niveau haut est d'amplitude croissante afin que les transferts successifs s'effectuent toujours dans le même sens et afin de retenir les quantités de charges d'entraînement.

Lorsque la quantité de charge-signal $Q_S$ a été transférée dans le registre de lecture, les charges d'entraînement de $Q_4$ à $Q_1$ sont transférées, en sens inverse, du registre jusqu'à $C_o$ pour permettre le transfert de la charge-signal suivante. Cette étape est illustrée sur la figure 4c uniquement en ce qui concerne le retour de $Q_o$ vers $C_o$, mais cette étape commence par le retour de $Q_4$ vers $C_4$ à partir de $C_5$, puis par le retour de $Q_3$ vers $C_3$ à partir de $C_4$, et ainsi de suite.

Les charges d'entraînement $Q_5$ sont transférées, du registre vers les capacités $C_5$, lorsque le signal $\phi_{E6}$ passe au niveau haut, juste avant le transfert vers le registre de $Q_5 + Q_S$.

Si l'on prend pour exemple le retour de $Q_o$ vers $C_o$, celui-ci s'opère lorsque le signal $\phi_{E1}$ appliqué à la grille $G_1$ est à un niveau haut $V_S(\phi_{E1})$ et alors que le signal $\phi_{C1}$ appliqué à la capacité $C_1$ passe à un niveau bas.

L'amplitude de $Q_o$ est déterminée par l'amplitude $\phi_{C1}$ de la variation du potentiel de la capacité $C_1$ entre son niveau bas actuel et son niveau haut, lors du transfert de $(Q_1 + Q_S)$ vers $C_2$, lorsqu'il y a alignement sur le potentiel $V_S(Q_{E2})$ fixé par la grille $G_2$.

On peut écrire :

$$Q_o/(C_1 + C_{P1}) = \Delta\phi_{C1} \cdot (C_1/C_1 + C_{P1}) - (V_S(\phi_{E2}) - V_S(\phi_{E1}))$$

où $C_{P1}$ est la capacité de la diode $d_2$, par rapport au substrat, au point B

d'où : $Q_o = \Delta\phi_{C1} \cdot C_1 - (V_S(\phi_{E2}) - V_S(\phi_{E1})) \cdot (C_1 + C_{P1})$    (11)

Des expressions analogues définissent les autres charges d'entraînement, excepté la charge d'entraîne-

ment $Q_5$ qui est introduite par le registre de lecture, de façon connue.

Pour éviter un fonctionnement du registre de lecture avec des tensions trop élevées, on est conduit à limiter l'amplitude des barrières de potentiel $\Delta V_S = V_S (\phi_{Ei}) - V_S (\phi_{Ei-1})$, par exemple entre 1,5 et 2,5 V.

On peut choisir des barrières de potentiel $\Delta V_S$ égales sur tout le circuit 5.

En ce qui concerne les tensions $\Delta \phi_{C1}$, $\Delta \phi_{C2}$..., on peut les choisir égales pour simplifier l'électronique de commande.

On a vu précédemment que les charges d'entraînement ou de polarisation devaient satisfaire à la relation suivante :

$$\frac{Q_i}{C_i} \gg \phi_F = \frac{kT}{q} \cdot Ln \frac{N_D}{n_i} = n \, k \frac{T}{q} \quad (1')$$

Par ailleurs, à partir de la relation (11) qui s'écrit :

$$Q_i = \Delta \phi_{Ci+1} \cdot C_{i+1} - (V_S (\phi_{Ei+2}) - V_s(\phi_{Ei+1})) (C_{i+1} + C_{P(i+1)})$$

,on peut obtenir une expression simplifiée de $Q_i$ en négligeant $C_p(i+1)$ devant $C_{i+1}$ et en considérant que :

$$\Delta \phi_{C1} = \Delta \phi_{C2} = ... = ...\Delta\phi_{Ci+1} = \Delta \phi_C \text{ et que } V_S (\phi_{Ei+2}) - V_S (\phi_{Ei+1}) = \Delta V_S :$$

$$Q_i \simeq C_{i+1} \cdot (\Delta \phi_C - \Delta V_S) \quad (12)$$

La combinaison des deux relations (1') et (12) donne le rapport suivant :

$$\frac{C_i}{C_{i+1}} \ll \frac{\Delta \phi_C - \Delta V_S}{n \frac{kT}{q}} = r \quad (13)$$

Avec $\Delta \phi_c = 5V, \Delta V_S = 2,5$ V et $r = 12$, on obtient :

$$C_i/C_{i+1} \leq r = 8$$

On conserve ce rapport entre deux capacités successives dans tout le circuit 5, ce qui donne la relation suivante :

$$C_N = C_o/r^N$$

où, N est le nombre de capacités du circuit 5.

La relation (1') peut alors s'écrire :

$$\frac{Q_N}{C_N} = \frac{Q_N}{C_o} \cdot r^N \gg \frac{n \, k.T}{q} \cdot$$

$$\text{soit } r^N \gg \frac{nkT}{q} = \frac{C_o}{Q_N}$$

$$\text{et } N \gg \frac{Ln\left(\frac{nkT}{q} \frac{Co}{Q_N}\right)}{Ln \, r}$$

EP 0 275 740 B1

Si l'on choisit d'adopter les valeurs suivantes :

$C_o$ = 1000 pF, $Q_N$ = 1pC, où $Q_N$ est la charge d'entraînement véhiculée par le registre, r = 8 et n = 12, on obtient pour N la limite suivante :

$N \geq 2,7$.

On choisit alors N = 3, et chaque circuit 5 comporte alors trois capacités $C_1$, $C_2$, $C_3$ de valeurs respectivement 125 pF, 15pF et 2pF.

Tous les dispositifs à transfert de charge dont il est question sont des dispositifs à canal enterré, où le transfert des charges s'effectue en volume.

Ainsi, le transfert des charges s'effectue en volume dans le registre de lecture 4 et dans les circuits 5, au niveau des grilles des transistors MOS.

Lorsque le transfert des charges s'effectue en volume, les effets de champ électrique latéral sont beaucoup plus importants que lorsque le transfert des charges s'effectue en surface. Il en résulte une modulation de la barrière de potentiel existant sous chaque grille de transfert, cette modulation ayant pour effet de limiter l'efficacité de transfert.

Dans la demande de brevet français FR-A-2.551.919, déposée le 13 septembre 1983, au nom de Thomson-CSF, il est proposé de remédier à cet inconvénient de la modulation de la barrière de potentiel en remplaçant chaque grille de transfert des charges par une première grille portée à une tension continue suivie selon le sens de transfert des charges par une seconde grille recevant un signal de commande.

Ainsi dans le cas de la figure 4, chaque grille $G_1$ à $G_6$ reçoit un signal de commande $\phi_{E1}$ à $\phi_{E6}$ et chacune de ces grilles est précédée par une grille $G_1$ à $G_6$ portée à une tension continue.

La présence de ces grilles $G_1$ à $G_6$ ne modifie pas le fonctionnement du circuit 5 tel qu'il a été exposé précemment.

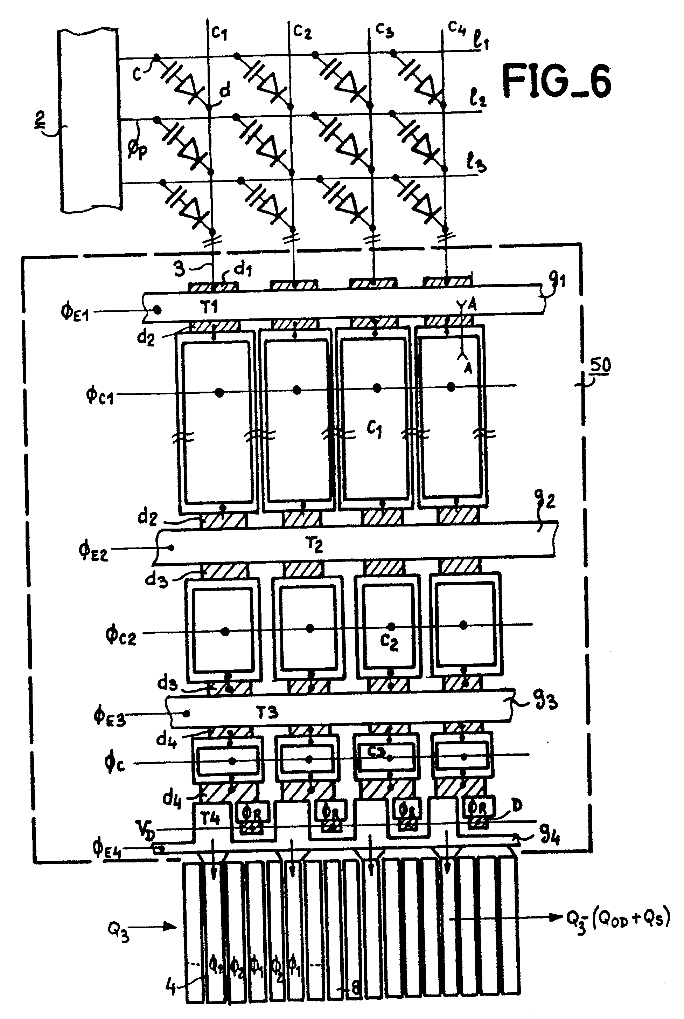

On va dans ce qui suit par la description des figures 5 à 8 donner un exemple d'utilisation du circuit de lecture décrit précédemment.

Le cas particulier pris comme exemple concerne le domaine de la radiologie.

On utilise une matrice d'éléments photosensibles de grandes dimensions, par exemple 40cm × 40cm, qui comporte 1000 lignes et 1000 colonnes d'éléments photosensible. Sur la figure 5, on a représenté de façon schématique cette matrice 1.

Chaque élément photosensible, est constitué par une photodiode en série avec une capacité. On peut ainsi obtenir des matrices de grandes dimensions du fait que les dépôts en couche mince, de silicium amorphe par exemple, sur un substrat en verre, sont maintenant bien maîtrisés.

Il est question de telles matrices dans les demandes de brevet français n° 86.00656 et n° 86.00716, déposées en janvier 1986, au nom de Thomson-CSF et correspondant respectivement à EP-A-0 234 968 (publié le 02.09.1987) et EP-A-0 233 104 (publié le 19.08.1987).

On a montré sur la figure 5 que l'on utilise pour lire la matrice 1 des circuits de lecture selon l'invention 50, comportant plusieurs circuits 5, tels que ceux représentés sur la figure 3. Sur la figure 5, chaque circuit de lecture comporte 100 circuits 5 et se trouve relié à 100 colonnes conductrices 3 provenant de la matrice 1. Les circuits 5 sont portés par un support en céramique 6, muni de pistes sérigraphiées qui relient les circuits les uns aux autres.

La capacité des connexions de colonnes 3 ainsi réalisées est très élevée, de l'ordre de 1000 pF, par rapport aux capacités de l'ordre d'1 pF des détecteurs et du registre de lecture relié aux circuits 5.

Dans les dispositifs photosensibles entièrement réalisés sur du silicium, la capacité des connexions de colonnes est beaucoup plus faible, de l'ordre d'1 pF.

Chaque circuit de lecture 50 est donc relié à un registre de lecture 4 du type CCD qui comporte 200 ou 400 étages, afin d'éviter d'utiliser des grilles de transfert qui soient trop longues. Les étages intermédiaires peuvent être utilisés pour stocker et lire les charges parasites, comme on le verra par la suite. On peut utiliser ensuite un multiplexeur 7 pour multiplexer les sorties des registres de lecture 4, afin que le dispositif de la figure 5 ne comporte qu'une seule sortie S.

Dans les deux brevets Thomson-CSF précédemment cités, la lecture des éléments photosensibles se fait en utilisant des amplificateurs différentiels montés en intégrateur. Les circuits de lecture selon l'invention permettent la suppression de ces amplificateurs qui sont difficiles à réaliser et coûteux.

La figure 6 montre de façon schématique, vu de dessus, une partie du dispositif photosensible de la figure 5.

On a représenté trois lignes $l_1$, $l_2$, $l_3$ et quatre colonnes $c_1$, $c_2$, $c_3$, $c_4$ comportant des éléments photosensibles constitués par une capacité C en série avec une photodiode d et reliant une ligne à une colonne, la cathode de la photodiode étant reliée à une colonne. L'invention s'applique quelles que soient les positions respectives de la capacité et de la photodiode et que l'anode ou la cathode de la photodiode soient reliées à une ligne ou à une colonne. On a représenté une partie du registre d'adressage des lignes

8

EP 0 275 740 B1

2 qui délivre des signaux de commande $\phi_p$ et une partie d'un circuit de lecture 50 selon l'invention.

Chaque connexion de colonne 3 est reliée à un circuit 5, tel que celui représenté sur les figures 3 et 4. Sur la figure 6, les circuits 5 sont représentés vus de dessus et comportent trois capacités de stockage $C_1$, $C_2$, $C_3$ et quatre transistors MOS $T_1$ à $T_4$. Les transistors MOS $T_4$ conduisent les charges sur un registre de lecture 4. Chaque diode $d_4$ débouche à la fois sur une grille $G_4$ et sur une autre grille $\phi_R$ suivie par un drain D qui reçoit une tension de polarisation $V_D$ et qui est utilisé pour l'évacuation des charges parasites comme cela sera expliqué par la suite. On a aussi représenté sur la figure 6 une partie d'un registre de lecture 4, commandé par deux signaux d'horloge $\phi_1$, $\phi_2$ et comportant quatre étages 8 pour chaque connexion de colonnes 3 reliée au circuit de lecture 50.

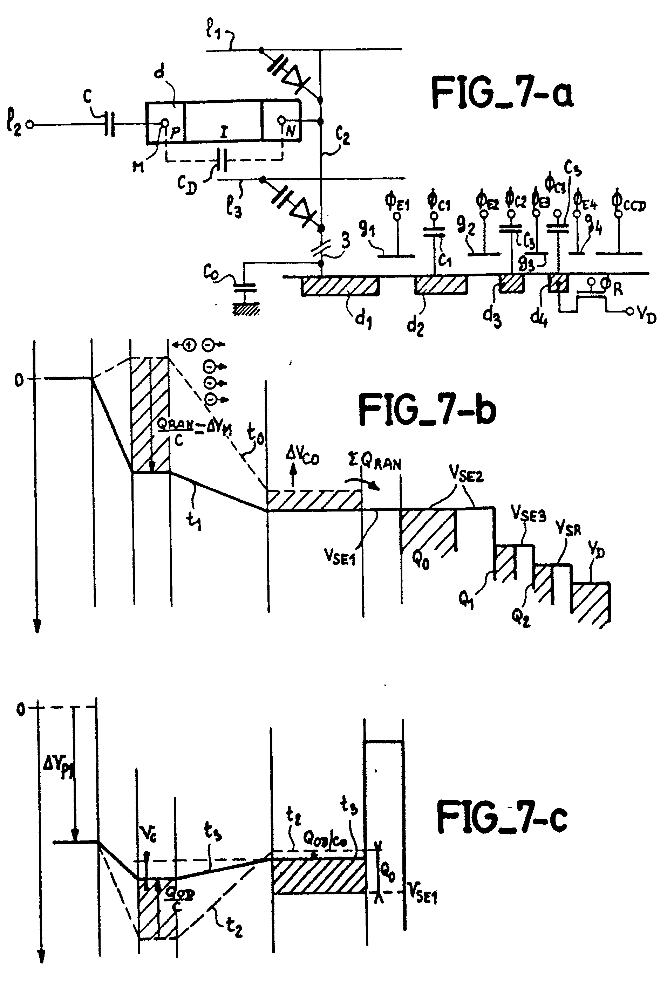

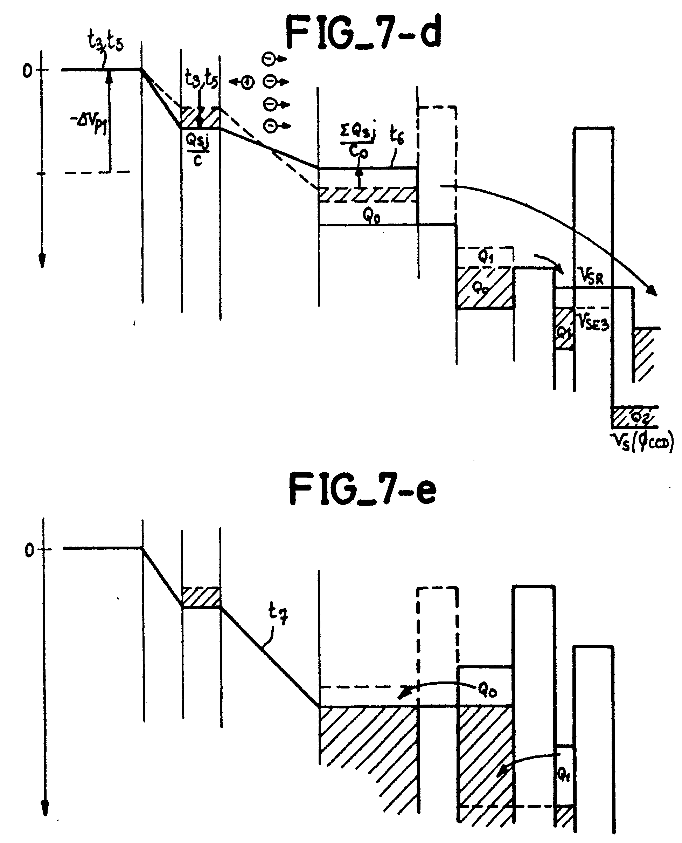

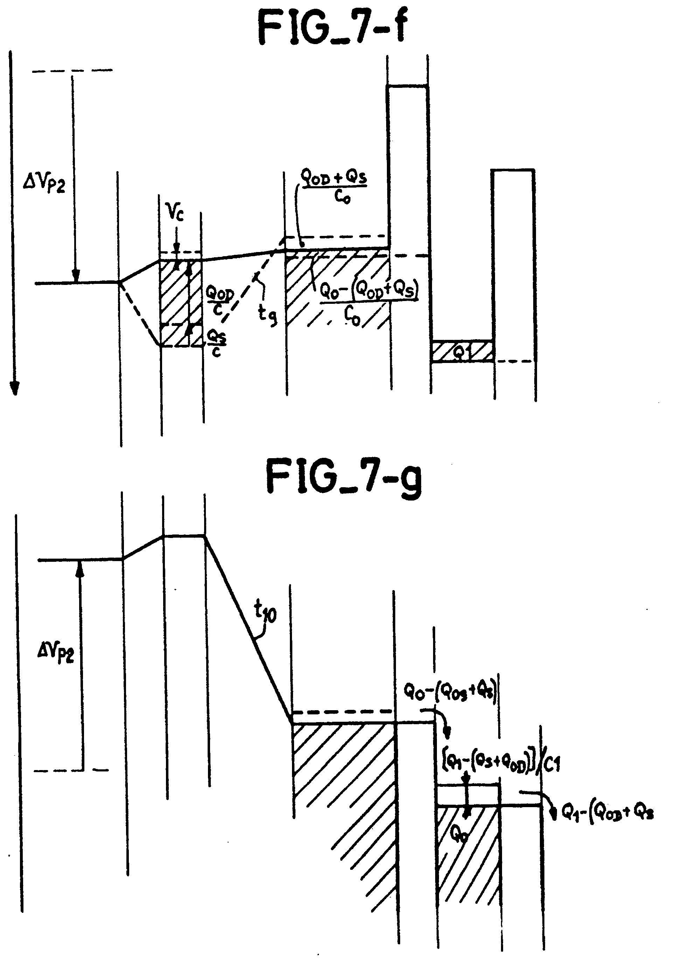

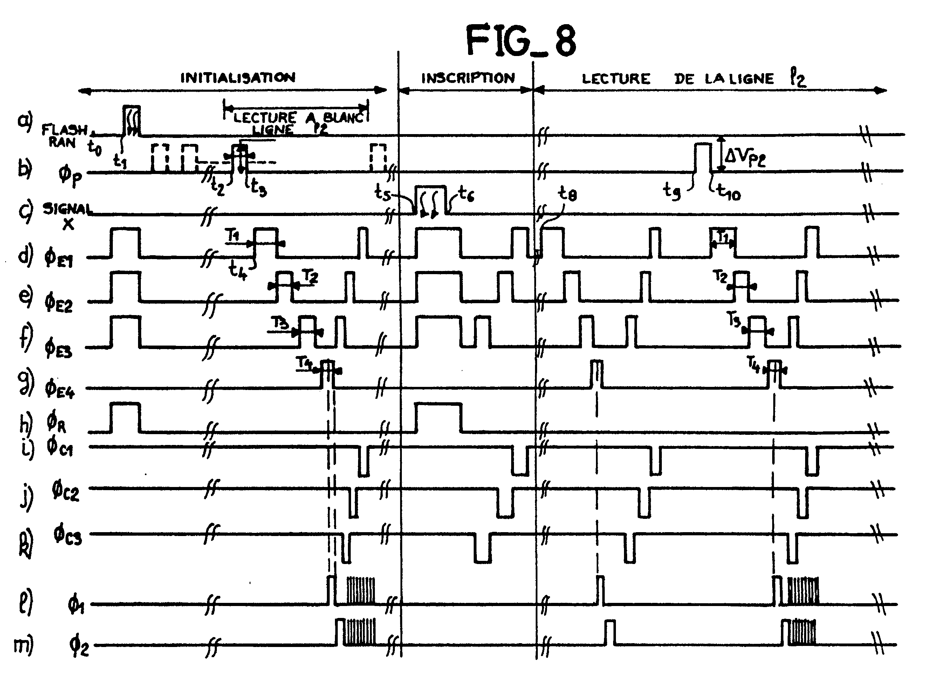

On va maintenant expliquer le fonctionnement du dispositif de la figure 6 en décrivant les figures 7a à g et 8a à m.

Il faut savoir que le procédé de lecture qui est utilisé pour lire le dispositif de la figure 6 a été partiellement décrit dans la demande de brevet n° 86.00656 déjà citée.

Une phase de ce procédé de lecture consiste à superposer au signal utile un fond de charge pour polariser chaque photodiode au-delà de sa tension de coude de manière certaine lors de l'impulsion de commande de lecture, même en l'absence de signal utile. Pour réaliser une telle superposition on peut alterner, comme cela apparaît sur la figure 8, une étape d'initialisation avec éclairement de tout le panneau, et lecture "à blanc" du panneau ligne après ligne, puis une étape d'inscription, au cours de laquelle le signal à détecter est appliqué à tout le panneau, et enfin une étape de lecture effective du panneau, ligne après ligne.

Les signaux d'adressage $\phi_p$ fournissent la charge de polarisation grâce à leurs amplitudes différentes égales à $\Delta V_{p1}$ pour la lecture "à blanc" et à $\Delta V_{p2}$ pour la lecture effective.

La figure 7a est une vue en coupe transversale à travers le circuit 5 et le registre de lecture 4 de la figure 6. On s'intéresse plus particulièrement au fonctionnement de l'élément photosensible relié à la ligne $l_2$ et à la colonne $c_2$.

Sur la figure 7a, on a représenté la structure physique de la photodiode d qui peut être, par exemple, comme cela est représenté une photodiode du type PIN dont la zone N est reliée à la colonne $c_2$ et dont la zone P est reliée en un point M à la capacité C.

Les figures 7b à 7g montrent l'évolution au cours du temps du potentiel dans le substrat semiconducteur, tel que du silicium, dans lequel est réalisé le circuit 5.

Les figures 8a à 8 m montrent le diagramme temporel des signaux de commande utilisés.

Sur les figures 8a à m, on a représenté successivement le flash de remise à niveau du dispositif, appelé flash RAN, le signal $\phi_P$ appliqué à la ligne $l_2$ par le registre 2, le signal X détecté par le dispositif photosensible par l'intermédiaire d'un scintillateur, les signaux $\phi_{E1}$ à $\phi_{E4}$, le signal $\phi_R$, les signaux $\phi_{C1}$, $\phi_{C2}$, $\phi_{C3}$, puis les signaux $\phi_1$ et $\phi_2$ commandant le registre de lecture 4.

Une première étape du fonctionnement du dispositif est appelée l'étape d'initialisation.

A l'instant $t_0$, le signal $\phi_p$ que reçoit la ligne $l_2$ est à O Volt, à l'état bas. Du fait des lectures précédentes, les photodiodes de la matrice sont polarisées en inverse, comme cela est illustré sur la figure 7b pour la photodiode de l'élément photosensible reliant la ligne $l_2$ à la colonne $c_2$. Le potentiel de la capacité $C_O$ a été fixé précédemment par $V_{SE1}$ et la charge de polarisation $Q_O$ a été ramenée de $C_1$ sur $C_O$. Les phases $\phi_{E1}$ à $\phi_{E4}$ et $\phi_R$ sont au niveau bas, et les phases $\phi_{C1}$, $\phi_{C2}$ et $\phi_{C3}$ sont au niveau haut.

A l'instant $t_1$, tout le panneau photosensible reçoit un flash de remise à niveau ou flash RAN qui est représenté sur la figure 8a. Ce flash a pour but de décharger les photodiodes qui se trouvent trop polarisées en inverse.

Le flash de remise à niveau introduit une quantité de charge $Q_{RAN}$ qui fait varier les potentiels dans la zone P de chaque photodiode d et sur la capacité $C_O$ de la colonne conductrice 3 reliée à chaque photodiode.

Sur la figure 7b, on voit que le point M reçoit une quantité de charge $+ Q_{RAN}$ et son potentiel augmente de la valeur suivante

$$\Delta V_M = \frac{Q_{RAN}}{C} \cdot \frac{1}{1 + C_D/C_O + C_D/C} \simeq Q_{RAN}/C$$

où $C_D$ est la capacité existant entre la zone P et la zone N de chaque photodiode. Cette capacité $C_D$ est représentée en trait discontinu sur la figure 7a.

9

La capacité $C_O$ de la colonne conductrice 3, reçoit une quantité de charge $\Sigma\ Q_{RAN}$, provenant de toutes les photodiodes reliées à cette même colonne conductrice 3. La variation de potentiel sur la capacité $C_O$, $\Delta V_{CO}$, se fait en sens inverse de la variation de potentiel au point M, $\Delta V_M$.

A l'instant $t_1$, les signaux $\phi_{E1}$, $\phi_{E2}$, $\phi_{E3}$ et $\phi_R$ passent au niveau haut ce qui permet l'évacuation de la quantité de charge $Q_{RAN}$ vers le drain D comme cela est illustré sur la figure 7b à droite.

Lorsque le flash de remise à niveau est terminé, on fait revenir les quantités de charge d'entraînement $Q_O$, $Q_1$, $Q_2$ et $Q_3$ vers leur capacité d'origine $C_O$, $C_1$, $C_2$. En effet, le transfert de la quantité de charge $Q_{RAN}$ vers le drain se fait en utilisant ces quantités de charges d'entraînement.

L'étape d'iniatialisation se poursuit par une lecture à blanc ligne après ligne de la matrice photosensible.

Cette lecture s'effectue par le passage du signal $\phi_p$ au niveau haut, successivement pour chaque ligne de la matrice.

A l'instant $t_2$, la ligne $l_2$ reçoit un signal $\phi_p$ au niveau haut. Les photodiodes de cette ligne $l_2$ sont polarisées en direct. On n'a représenté sur les figures 8a à m que la lecture "à blanc" de la ligne $l_2$. Entre les instants $t_2$ et $t_3$, la ligne $l_2$ reçoit une impulsion de tension d'amplitude $\Delta V_{P1}$. On voit sur la figure 7c qu'une quantité de charge $Q_{OD}$ est transférée de la capacité $C_O$ vers le point M pendant l'intervalle de temps $T_i = t_3 - t_2$. La tension aux bornes des photodiodes de la ligne $l_2$ devient égale à la tension coude des photodiodes $V_c$.

A l'instant $t_4$, commence le transfert vers le registre de lecture de quantités de charge correspondant à la lecture des éléments photosensibles de la ligne $l_2$. On lit ainsi un signal correspondant au signal d'obscurité de chaque photodiode de la ligne $l_2$. Le transfert de ces quantités de charge se fait en leur superposant sucessivement les charges d'entraînement $Q_O$, $Q_1$, $Q_2$, $Q_3$.

Sur les figures 8a à m, on a indiqué le début du transfert de ces charges vers le registre de lecture par le passage du signal $\phi_{E1}$ au niveau haut à l'instant $t_4$ pendant un temps $T_1$. Le signal $\phi_{E1}$ revient au niveau bas et le signal $\phi_{E2}$ passe alors au niveau haut pendant un temps $T_2$, puis le signal $\phi_{E3}$ pendant un temps $T_3$ et le signal $\phi_{E4}$ pendant un temps $T_4$. Une fois les charges entrées dans le registre de lecture, les signaux d'horloge $\phi_1$ et $\phi_2$ du registre passent alternativement au niveau haut pour assurer le transfert des charges vers la sortie du registre. Les charges d'entraînement $Q_O$, $Q_1$, $Q_2$, sont ensuite renvoyées vers leur capacité d'origine par le passage au niveau bas de $\phi_{C3}$, puis de $O_{C2}$ puis de $\phi_{C1}$ et le passage au niveau haut de $\phi_{E3}$, $\phi_{E2}$, $\phi_{E1}$.

La charge d'entraînement $Q_3$ est renvoyée du registre vers la capacité $C_3$, au début de l'intervalle de temps $T_4$, alors que $\phi_{E4}$ est au niveau haut et que $\phi_1$ est encore au niveau bas.

Une fois la lecture "à blanc" de la ligne $l_2$ terminée, on effectue la lecture "à blanc" de la ligne $l_3$, et ainsi de suite on lit "à blanc" toutes les lignes du panneau.

On peut mettre en mémoire le signal de sortie du registre de lecture correspondant au signal d'osbscurité des photodiodes de chaque ligne du panneau pour faire une correction ultérieure lors de l'étape de lecture.

Lorsque chaque ligne du panneau a été lue "à blanc", le signal $\phi_p$ revient à zéro pour toutes les lignes du panneau. Toutes les photodiodes du panneau se trouvent à nouveau polarisées en inverse mais avec une valeur plus faible qu'à l'instant $t_o$ car le signal $\phi_p$, lors de l'étape d'initialisation, a une amplitude $V_{p1}$ plus faible que son amplitude $V_{p2}$ lors de l'étape de lecture. Pour la ligne $l_2$, c'est à partie de l'instant $t_3$ que $\phi_p$ revient à zéro ce qui est illustré sur la figure 7d.

A l'instant $t_5$, commence l'étape d'inscription du panneau. Le signal à détecter, qui est en l'occurence un rayonnement x, est envoyé simultanément sur tout le panneau par l'intermédiaire d'un scintillateur.

La variation de potentiel au point M est sensiblement égale à $Q_{Sj/C}$ et la variation de potentiel sur la capacité $C_O$ est sensiblement égale à $\Sigma\ Q_{Sj}/C_O$, par analogie avec ce qui s'est passé au temps $t_1$ lorsqu'a été appliquée l'impulsion de remise à niveau. Cette évolution de potentiel est décrit sur la figure 7d.

Le signal X est appliqué entre les instants t5 et t6. Entre ces instants, les signaux $\phi_{E1}$, $\phi_{E2}$, $\phi_{E3}$ et $O_R$ sont au niveau haut. Ainsi, les charges s'écoulent directement de la capacité $C_O$ vers le drain d'évacuation des charges D.

Les charges d'entraînement sont ramenées vers leur capacité d'origine à partir de l'instant $t_7$ par le passage successif de $\phi_{C3}$, $\phi_{C2}$, $\phi_{C1}$ au niveau bas et le passage successif de $\phi_{E3}$, $\phi_{E2}$, $\phi_{E1}$ au niveau haut, ce qui est illustré sur la figure 7e en ce qui concerne le retour des charges $Q_1$ et $Q_O$.

L'étape d'inscription est alors terminée. L'étape suivante est la lecture, ligne après ligne, de tout le panneau.

La lecture de chaque ligne du panneau peut comporter les trois séquences suivantes :
- la lecture éventuelle des charges parasites constituées par les charges résiduelles provenant de la lecture de la ligne précédante ;

- le transfert des charges-signal provenant de chaque élément photosensible sur une colonne conductrice ;
- puis, la lecture des charges-signal.

Sur les figures 8a à m, on n'a représenté que la lecture de la ligne l₂.

A partir de l'instant t₈, la lecture des charges parasites Q_p constituées par les charges résiduelles provenant de la lecture de la ligne précédente commence.

Les signaux de commande φ_E1, φ_E2, φ_E3 et φ_E4 passent successivement au niveau haut. Il y a transfert de la quantité de charge d'entraînement Q₃ du registre vers la capacité C₃, puis le signal φ₁ passe à son tour au niveau haut et il y a transfert dans le registre de Q_p + Q₃.

Les signaux de commande du registre φ₁ et φ₂ passent une fois au niveau haut, comme cela est représenté sur les figures 8 l et m. On stocke alors dans les étages intermédiaires du registre les charges parasites.

Les charges d'entraînement Q₀, Q₁, Q₂ sont ramenées vers leur capacité d'origine et commence alors à l'instant t₉ le transfert des charges-signal des éléments photosensibles de la ligne l₂ sur les colonnes conductrices.

A l'instant t₉, la ligne l₂ reçoit un signal φ_p d'amplitude égale à ΔV_p2. Les photodiodes de cette ligne sont polarisées en direct. Le schéma de la figure 7f montre que chaque photodiode pompe une quantité de charge égale à Q_OD + Q_S sur sa colonne conductrice pour se retrouver à sa tension de coude V_c au temps t₁₀ lorsque le signal φ_p revient à zéro. La charge de polarisation Q₀ se trouve ainsi diminuée de la valeur Q_OD + Q_S comme cela est représenté sur la figure 7g. Cette quantité de charge Q_OD + Q_S est ensuite soustraite de Q₁, puis de Q₂ et Q₃ lors de son transfert vers le registre de lecture. Les signaux d'horloge φ₁ et φ₂ du registre transfèrent l'information en sortie du registre. Les charges d'entraînement Q₀, Q₁, Q₂ sont ramenées vers leurs capacités d'origine.

Parmi les variantes de l'invention, on peut citer la possibilité d'utiliser une matrice photosensible constituée de plusieurs modules, mis bout à bout. Cette possibilité a été décrite dans la demande de brevet français n° 86.06334, déposée le 30 avril 1986, au nom de Thomson-CSF, et publiée le 06.11.1987 sous le no.: FR-A-2 598 250 (correspondant à EP-A-0 245 147, publié le 11.11.87). Chaque module comporte un réseau de détecteurs photosensibles ayant le même nombre de colonnes que la matrice mais ayant un nombre inférieur de lignes. On peut prévoir que chaque module comporte ses propres moyens d'adressage des lignes, situés sur un bord du substrat, côté détecteurs et ses propres moyens de lecture, situés de l'autre côté du substrat par rapport aux détecteurs, un écran opaque au rayonnement à détecter étant intercalé entre le substrat et ces moyens et ces moyens étant reliés aux connexions de colonnes provenant du côté opposé du substrat par des connexions suivant l'une des faces latérales du substrat.

L'utilisation de modules 2 raboutés pour constituer la matrice photosensible permet une diminution de la valeur de la capacité des colonnes.

Une variante de l'invention consiste à utiliser des amplificateurs de contre-réaction situés dans l'exemple de la figure 6 entre les connexions de colonnes 3 et la grille G₁. L'entrée des amplificateurs est reliée à une connexion de colonne et la sortie des amplificateurs est reliée à la grille G₁. L'utilisation d'amplificateurs de contre-réaction a été décrite dans la demande de brevet français FR-A-2.571.572 déposée le 9 octobre 1984 au nom de Thomson-CSF.

**Revendications**

1. Circuit de lecture d'un dispositif photosensible à transfert de ligne, le dispositif comportant une zone photosensible (1) constituée d'éléments photosensibles (P) disposés selon des lignes et des colonnes, les éléments photosensibles (P) d'une même colonne étant reliés à une colonne conductrice (3) qui aboutit à un circuit de lecture, ce circuit de lecture comportant au moins un registre à décalage à transfert de charge (4) formant registre de lecture, la capacité des colonnes conductrices étant élevée par rapport à celle des éléments photosensibles (P) et du registre (4), caractérisé en ce que ce circuit de lecture (4,50) comporte, pour chaque colonne conductrice (3), plusieurs capacités de stockage des charges (C₁, C₂...C₅) séparées respectivement par un transistor MOS (T₁, T₂...T₅), fonctionnant en saturation et assurant le passage des charges-signal (Q_S) provenant de chaque colonne conductrice (3) d'une capacité à la suivante jusqu'au registre de lecture (4), les capacités de stockage (C₁, C₂...C₅), ayant des valeurs décroissantes lorsqu'on se rapproche du registre de lecture (4), en ce que le circuit de lecture comporte aussi des moyens pour générer des quantités de charge de polarisation (Q₀, Q₁, ...Q₅) accompagnant le transfert des charges-signal (Q_S) provenant d'une colonne conductrice (3) vers une capacité de stockage, puis leur transfert d'une capacité de stockage à la suivante jusqu'au registre, les quantités de charges de polarisation ayant des valeurs décroissantes lorsqu'on se rapproche du registre de lecture (4) et en ce que le circuit de lecture comporte aussi des moyens assurant le retour des quantités de charges de polarisation d'une capacité de stockage ou du registre vers la capacité précédante.

2. Circuit de lecture selon la revendication 1, caractérisé en ce qu'il comporte un registre à décalage à transfert de charge (4), des capacités de stockage des charges ($C_1$, $C_2$...$C_5$) et des transistors MOS ($T_1$, $T_2$...$T_5$) qui sont constitués par des dispositifs à transfert de charge à canal enterré.

3. Circuit de lecture selon la revendication 2, caractérisé en ce que chaque transistor MOS ($T_1$, $T_2$...$T_5$) comporte une grille de transfert des charges ($G_1$, $G_2$...$G_6$) constituée par une première grille pouvant recevoir une tension continue, suivie selon le sens de transfert des charges, par une seconde grille pouvant recevoir un signal de commande pulsé.

4. Circuit de lecture selon l'une des revendications 1 à 3, caractérisé en ce que le transistor MOS ($T_4$) le plus proche de registre de lecture (4) comporte une grille ($G_4$) conduisant les charges vers le registre de lecture (4) et une autre grille ($\phi_R$) conduisant les charges vers un drain d'évacuation (D).

5. Dispositif photosensible à transfert de ligne, comportant une zone photosensible (1) constituée d'éléments photosensibles (P) disposés selon des lignes et des colonnes, les éléments photosensibles (P) d'une même colonne étant reliés à une colonne conductrice (3) qui aboutit à un circuit de lecture (4,50), ce circuit de lecture comportant au moins un registre à décalage à transfert de charge (4), la capacité des colonnes conductrices (3) étant élevée par rapport à celle des éléments photosensibles (P) et du registre (4) , caractérisé en ce qu'il comporte un circuit de lecture (4,50) selon l'une des revendications 1 à 4.

6. Dispositif selon la revendication 5, caractérisé en ce qu'il est constitué par plusieurs modules mis bout à bout.

7. Dispositif selon l'une des revendications 5 ou 6, caractérisé en ce qu'il comporte des amplificateurs de contre réaction dont l'entrée est reliée à une connexion de colonne (3) et la sortie est reliée à une grille ($G_1$) appartenant au premier transistor MOS ($T_1$) du circuit de lecture (50).

8. Dispositif selon l'une des revendications 5 à 7, caractérisé en ce que chaque élément photosensible (P), est constitué par une photodiode (d) en série avec une capacité (c), le circuit série ainsi formé reliant une des connexions de lignes à l'une des connexions de colonnes de la zone photosensible (1).

9. Dispositif selon la revendication 8, caractérisé en ce que chaque photodiode (d) est du type PIN.

10. Procédé de lecture d'un dispositif photosensible à transfert de ligne selon l'une des revendications 8 ou 9 le dispositif comportant un circuit de lecture (4,50) selon la revendication 4, le procédé étant caractérisé en ce qu'il comporte les étapes suivantes :
   a) - une étape d'initialisation, au cours de laquelle toute la zone photosensible (1) reçoit un flash lumineux intense (flash RAN, $t_1$) déchargeant les photodiodes qui sont trop polarisées en inverse, ce qui s'accompagne de l'évacuation de charges vers le drain d'évacuation (D), ensuite on effectue une lecture ligne après ligne de la zone photosensible (1) en faisant successivement passer en direct les photodiodes de chaque ligne de la zone photosensible (ligne $l_2$, $\Delta V_{p1}$, $t_2$, $t_3$) en utilisant des impulsions de tension d'amplitude $\Delta V_{p1}$ appliquées respectivement à chaque ligne;
   b) - une étape d'inscription, au cours de laquelle le signal à détecter (signal X) est envoyé sur toute la zone photosensible (1, $t_5$, $t_6$), ce qui s'accompagne de l'évacuation de charges vers le drain ;
   c) - une étape de lecture de la zone photosensible ligne après ligne, avec pour chaque ligne :
      - transfert des charges-signal ($Q_S$) provenant des éléments photosensibles sur les colonnes conductrices (3) par le passage en direct des photodiodes en utilisant une impulsion de tension d'amplitude $\Delta V_{p2}$ supérieure à l'amplitude $\Delta V_{p1}$ des impulsions utilisées lors de l'étape a (ligne $l_2$, $\Delta V_{p2}$, $t_9$, $t_{10}$);
      - puis, lecture des charges-signal avec transfert des charges-signal dans le registre, tous les transferts de charges vers le registre ou vers le drain étant accompagnés par des charges d'entraînement ($Q_0$, $Q_1$, $Q_2$...) qui sont ensuite ramenées, après lecture et transfert des charges-signal, sur leur capacité d'origine.

**11.** Procédé selon la revendication 10, caractérisé en ce que lors de l'étape a, on transfère vers le registre de lecture (4, $t_4$) les quantités de charge correspondant à la lecture des éléments photosensibles de cette ligne et en ce que ces informations correspondant au signal d'obscurité des photodiodes de chaque ligne de la zone photosensible (1) sont mises en mémoire pour faire une correction ultérieure lors de l'étape c.

**12.** Procédé selon l'une des revendications 10 ou 11, caractérisé en ce que lors de l'étape c, la lecture de chaque ligne commence par la lecture des charges parasites ($t_8$, $Q_p$) constituées par les charges résiduelles provenant de la lecture de la ligne précédante et par le transfert de ces charges dans le registre de lecture (4).

## Claims

**1.** A read circuit for a line transfer photosensitive device, said device comprising a photosensitive zone (1) constituted by photosensitive elements (P) arranged in lines and columns, the said photosensitive elements (P) of a given column being connected with a conductive column (3) which ends at a read circuit, said read circuit comprising at least one charge transfer shift register (4) constituting a read register, the capacity of the conductive columns (3) being made greater than that of the photosensitive elements (P) and of the register (4), characterized in that the read circuit (50) comprises, for each conductive column (3), a plurality of charge hold capacitor means ($C_1$, $C_2$...$C_5$) separated respectively by an MOS transistor ($T_1$, $T_2$..$T_5$), functioning at saturation and ensuring the passage of the signal charges ($Q_s$) originating from each conductive column (3) from one capacitor means to the next as far as the read register (4), the hold capacitor means ($C_1$, $C_2$..$C_5$) having values decreasing towards the read register (4), in that the read circuit also comprises means in order to generate polarization charge quantities ($Q_0$, $Q_1$,..$Q_5$) accompanying the transfer of the circuit charges ($Q_5$) originating from a conductive column (3) to a hold capacitor means, then the transfer thereof from one hold capacitor means to the following one as far as the register, the polarization charge quantities having values decreasing towards the read register (4) and in that the read circuit also comprises means ensuring the return of the polarization charge quantities of a hold capacitor means or of the register to the preceding capacitor means.

**2.** The read circuit as claimed in claim 1, characterized in that it comprises a charge transfer shift register (4), charge hold capacitor means ($C_1$, $C_2$..$C_5$) and MOS transistors ($T_1$, $T_2$..$T_5$), which are constituted by buried channel charge transfer devices.

**3.** The read circuit as claimed in claim 2, characterized in that each MOS transistor ($T_1$, $T_2$..$T_5$) comprises a charge transfer gate ($G_1$, $G_2$..$G_6$) constituted by a first gate able to receive a direct voltage, followed, in the direction of transfer of charges, by a second gate able to receive a pulsed control signal.

**4.** The read circuit as claimed in any one of the preceding claims 1 through 3, characterized in that the MOS transistor ($T_4$) nearest to the read register (4) comprises a gate ($G_4$) conducting said charges to the read register (4) and by another gate ($\phi_R$) conducting the charges to an evacuating drain (D).

**5.** A photosensitive line transfer device comprising a photosensitive zone (1) constituted by photosensitive elements (P) placed in lines and columns, the said photosensitive elements (P) of a given column being connected with a conductive column (3) which ends at a read circuit (4 and 50), said read circuit comprising at least one charge transfer shift register (4), the capacitor means of the conductive columns (3) being made greater than that of the photosensitive elements (P) and of the register (4), characterized in that it comprises a read circuit (4 and 50) as claimed in any one of the preceding claims 1 through 4.

**6.** The device as claimed in claim 5, characterized in that it is constituted by a plurality of modules arranged end to end.

**7.** The device as claimed in claim 5 or claim 6, characterized in that it comprises feedback amplifiers of which the input is connected with a column connection (3) and of which the output is connected with a gate ($G_1$) belonging to the first MOS transistor ($T_1$) of the read circuit (50).

8. The device as claimed in any one of the preceding claims 5 through 7, characterized in that each photosensitive element (P) is constituted by a photodiode (d) in series with a capacitor means (c), the circuit constituted in this manner connecting one of the line connections with one of the column connections of the photosensitive zone (1).

9. The device as claimed in claim 8, characterized in that each photodiode (d) is of the pin type.

10. A method of reading a line charge transfer photosensitive device as claimed in claim 8 or claim 9, characterized in that it comprises the following stages:

a) an initialization stage in the course of which all of the photosensitive zone (1) is acted upon by an intense light flash (flash RAN, t1) discharging the photodiodes which are excessively inversely polarized, something accompanying evacuation of the charges to the evacuation drain, then reading the photosensitive zone (1) line by line by causing direct successive passage of the photodiodes of the each line of the photosensitive zone (line $l_2$, $\Delta_{p1}$, $t_2$ and $t_3$) using voltage pulses of the amplitude $\Delta V_{p1}$ applied respectively to each line.

b) a write stage, during the course of which the signal to be detected (signal X) is transferred to the entire photosensitive zone (1, $t_5$ and $t_6$), something accompanying the evacuation of the charges to the drain;

c) a read stage for the photosensitive zone line by line, with the following for each line:

transfer of the signal charges ($Q_s$) from the photosensitive elements on the conducting columns (3) by causing direct successive passage of the photodiodes using a voltage pulse of the amplitude $\Delta V_{p1}$ greater than the amplitude $\Delta V_{p1}$ of the pulses employed during the state a (line $l_2$, $\Delta V_{p2}$, $t_9$ and $t_{10}$);

then reading the signal charges with transfer of the signal charges to the register, all the charge transfers to the register or to the drain being accompanied by drive charges ($Q_0$, $Q_1$ and $Q_2$..) which are then returned, to the capacitor means from which they originated.

11. The method as claimed in claim 10, characterized in that during the stage a there is a transfer to the read register (4 and $t_4$) of the charge quantities corresponding to the reading of the photosensitive elements of this line and in that the information corresponding to the dark signal of the photodiodes of each line of the photosensitive zone (1) are placed in a memory in order to perform later correction during the stage c.

12. The method as claimed in claim 10 or claim 11, characterized in that during the stage c the reading of each line commences by the reading of the parasitic charges ($t_g$ and $Q_p$) constituted by residual charges from the reading of the preceding line and by the transfer of these charges into the read register (4).

**Ansprüche**

1. Leseschaltung für eine lichtempfindliche Einrichtung mit Zeilenübertragung, wobei die Einrichtung einen lichtempfindlichen Bereich (1) aufweist, der von lichtempfindlichen Elementen (P) gebildet wird, die in Zeilen und Spalten angeordnet sind, wobei die lichtempfindlichen Elemente (P) derselben Spalte mit einem Spaltenleiter (3) verbunden sind, der an einer Leseschaltung endet, wobei diese Leseschaltung wenigstens ein ein Leseregister bildendes Schieberegister mit Ladungsübertragung (4) aufweist, wobei die Kapazität der Spaltenleiter (3) in bezug auf diejenige der lichtempfindlichen Elemente (P) und des Registers (4) erhöht ist, dadurch gekennzeichnet, daß diese Leseschaltung (4, 50) für jeden Spaltenleiter (3) mehrere Ladungsspeicherungskapazitäten ($C_1$, $C_2$...$C_5$) aufweist, die jeweils durch einen im Sättigungsbereich arbeitenden MOS-Transistor ($T_1$, $T_2$...$T_5$) getrennt sind, der den Durchgang der Signalladungen ($Q_s$), die von dem jeweiligen Spaltenleiter (3) kommen, von einer Kapazität zur nächsten bis zum Leseregister (4) gewährleistet, wobei die Speicherkapazitäten ($C_1$, $C_2$...$C_5$) in Richtung zu der Leseschaltung (4) hin abnehmende Werte besitzen, daß die Leseschaltung außerdem Mittel aufweist, um Polarisationsladungsmengen ($Q_0$, $Q_1$,...$Q_5$) zu erzeugen, die die Übertragung der von einem Spaltenleiter (3) kommenden Ladungssignale ($Q_s$) zu einer Speicherkazapität und dann deren Übertragung von einer Speicherkapazität zur nächsten bis zum Register begleiten, wobei die Polarisationsladungsmengen in Richtung zu dem Leseregister (4) hin abnehmende Werte besitzen, und daß die Leseschaltung außerdem Mittel aufweist, die die Rückkehr der Polarisationsladungsmengen einer Speicherkapazität oder des Registers zur vorhergehenden Kapazität gewährleisten.

2. Leseschaltung gemäß Anspruch 1, dadurch gekennzeichnet, daß sie ein Schieberegister zur Ladungsübertragung (4), Kapazitäten zur Ladungsspeicherung ($C_1, C_2...C_5$) und MOS-Transistoren ($T_1, T_2...T_5$) die von Ladungsübertragungseinrichtungen mit vergrabenem Kanal gebildet werden, umfaßt.

3. Leseschaltung gemäß Anspruch 2, dadurch gekennzeichnet, daß jeder MOS-Transistor ($T_1,, T_2...T_5$) ein Ladungsübertragungs-Gate ($G_1, G_2...G_5$) umfaßt, das von einem ersten Gate, das eine Gleichspannung empfangen kann, dem in Richtung der Ladungsübertragung ein zweites Gate folgt, das ein Steuerimpulssignal empfangen kann, gebildet wird.

4. Leseschaltung gemäß einem der Ansprüche 1 bis 3, dadurch gekennzeichnet, daß der MOS-Transistor ($T_4$), der sich am nächsten am Leseregister (4) befindet, ein Gate ($G_4$), das die Ladungen zum Leseregister (4) leitet, und ein anderes Gate ($\phi_R$), das die Ladungen zum Ableitungs-Drain (D) leitet, umfaßt.

5. Lichtempfindliche Einrichtung mit Zeilenübertragung, mit einem lichtempfindlichen Bereich (1), der von lichtempfindlichen Elementen (P) gebildet wird, die in Zeilen und Spalten angeordnet sind, wobei die lichtempfindlichen Elemente (P) derselben Spalte mit einem Spaltenleiter (3) verbunden sind, der an einer Leseschaltung (4, 50) endet, wobei diese Leseschaltung wenigstens ein Schieberegister mit Ladungsübertragung (4) aufweist, wobei die Kapazität der Spaltenleiter (3) in bezug auf diejenige der lichtempfindlichen Elemente (P) und des Registers (4) erhöht ist, dadurch gekennzeichnet, daß sie eine Leseschaltung (4, 50) gemäß einem der Ansprüche 1 bis 4 umfaßt.

6. Vorrichtung gemäß Anspruch 5, dadurch gekennzeichnet, daß sie von mehreren aneinandergefügten Modulen gebildet wird.

7. Vorrichtung gemäß einem der Ansprüche 5 oder 6, dadurch gekennzeichnet, daß sie gegengekoppelte Verstärker aufweist, deren Eingang mit einem Verbindungspunkt der Spalte (3) verbunden ist und deren Ausgang mit einem dem ersten MOS-Transistor ($T_1$) der Leseschaltung (50) zugehörigen Gate ($G_1$) verbunden ist.

8. Vorrichtung gemäß einem der Ansprüche 5 bis 7, dadurch gekennzeichnet, daß jedes lichtempfindliche Element (P) von einer mit einer Kapazität (c) in Reihe geschalteten Photodiode (d) gebildet wird, wobei die so gebildete Reihenschaltung einen der Verbindungspunkte der Zeilen mit einem der Verbindungspunkte der Spalten des lichtempfindlichen Bereichs (1) verbindet.

9. Vorrichtung gemäß Anspruch 8, dadurch gekennzeichnet, daß jede Photodiode (d) vom PIN-Typ ist.

10. Verfahren zum Lesen einer lichtempfindlichen Einrichtung mit Zeilenübertragung gemäß einem der Ansprüche 8 oder 9, wobei die Einrichtung eine Leseschaltung (4, 50) gemäß Anspruch 4 enthält, wobei das Verfahren dadurch gekennzeichnet ist, daß es die folgenden Schritte enthält:
a) - einen Initialisierungsschritt, in dessen Verlauf der gesamte lichtempfindliche Bereich (1) einen intensiven Lichtblitz (RAN-Blitz, $t_1$) empfängt, der die zu sehr entgegengesetzt polarisierten Photodioden entlädt, was zu der Ableitung der Ladungen in Richtung des Ableitungs-Drains (D) führt, wobei anschließend ein zeilenweises Lesen des lichtempfindlichen Bereichs (1) ausgeführt wird, indem nacheinander unter Verwendung von Spannungsimpulsen der Amplitude ΔVp1, die entspre-chend auf jede Zeile angewendet werden, die Photodioden einer jeden Zeile des lichtempfindlichen Bereichs (Zeile $l_2$, $\Delta V_{p1}$, $t_2$, $t_3$) direkt durchlaufen werden;
b) - einen Einschreibeschritt, in dessen Verlauf das zu erfassende Signal (Signal X) an den gesamten lichtempfindlichen Bereich (1, $t_5$, $t_6$) geschickt wird, was die Ableitung der Ladungen zum Drain zur Folge hat;
c) - einen Schritt des zeilenweisen Lesens des lichtempfindlichen Bereichs, der für jede Zeile umfaßt:
- Übertragung von von den lichtempfindlichen Elementen kommenden Signalladungen ($Q_s$) an die Spaltenleiter (3) durch direktes Durchlaufen der Photodioden unter Verwendung eines Spannungsimpulses mit der Amplitude $\Delta V_{p2}$, die über der Amplitude $\Delta V_{p1}$ der im Schritt a verwendeten Impulse liegt (Zeile $l_2$, $\Delta V_{p2}$, $t_9$, $t_{10}$);
- anschließendes Lesen der Signalladungen mit Übertragung der Signalladungen in das Register, wobei sämtliche Ladungsübertragungen zum Register von Mitnahmeladungen

($Q_0$,$Q_1$,$Q_2$...), die anschließend nach dem Lesen und der Übertragung der Signalladungen an ihre Ursprungskapazität zurückgeführt werden, begleitet werden.

11. Verfahren gemäß Anspruch 10, dadurch gekennzeichnet, daß im Schritt a) die dem Lesen der lichtempfindlichen Elemente dieser Zeile entsprechenden Ladungsmengen zum Leseregister (4, $t_4$) übertragen werden und daß diese Informationen, die dem Dunkelsignal der Photodioden einer jeden Zeile des lichtempfindlichen Bereichs (1) entsprechen, gespeichert werden, um im Schritt c) eine nachträgliche Korrektur auszuführen.

12. Verfahren gemäß einem der Ansprüche 10 oder 11, dadurch gekennzeichnet, daß im Schritt c) das Lesen einer jeden Zeile mit dem Lesen der parasitären Ladungen ($t_g$, $Q_p$), die von beim Lesen der vorhergehenden Zeile hervorgegangenen Restladungen und von der Übertragung dieser Ladungen in das Leseregister (4) gebildet werden, beginnt.

FIG_1

ART ANTERIEUR

REGISTRE
D'ADRESSAGE

N COLONNES

M
LIGNES

REGISTRE DE LECTURE

FIG_2

ART ANTERIEUR

REGISTRE
D'ADRESSAGE

$Q_0$   $Q_0$

$Q_0 + Q_s$   $Q_0 + Q_s$

$Q_1$   $Q_1$

$Q_s + Q_1$   $Q_1 + Q_s$

REGISTRE DE LECTURE   $\rightarrow Q_s + Q_1$

EP 0 275 740 B1

FIG_3

FIG_4-a

FIG_4-b

FIG_4-c

POTENTIEL CROISSANT

1000 LIGNES — 1000 COLONNES

100 COLONNES

FIG_5

18

# FIG_6

FIG_7-a

FIG_7-b

FIG_7-c

# FIG_7-d

# FIG_7-e

# FIG_7-f

# FIG_7-g

# FIG_8

EP 0 275 740 B1